# EUROPEAN PATENT APPLICATION

(11) **EP 4 797 616 A1**
(43) Date of publication of application: **26.08.2026**
(21) Application number: 25158933.9
(22) Date of filing: 19.02.2025
(51) Int. Cl.: H04L 9/40

(54) **COMBINED HIDDEN SEQUENCE NUMBER AND KEY REFERENCE FOR ENCRYPTED PROTOCOLS**

(71) Applicant: Huawei Technologies Co., Ltd., Shenzhen, Guangdong 518129 (CN)
(72) Inventor: FRESSANCOURT, Antoine, 80992 Munich (DE); IANNONE, Luigi, 80992 Munich (DE)
(74) Representative: Roth, Sebastian

(57) **Abstract**

This disclosure relates to network communication, particularly, with flows comprising encrypted packets. The disclosure provides a source node for sending packets to a target node, and a middle node between the source and target node. The source and the middle node each determine a temporary key based on a master symmetric key, which is available at the source and the middle node. Further, they each determine a pseudo-random sequence based on the temporary key. The source node sends a sequence of packets towards the target node, each packet comprising one element of the pseudo-random sequence as identifier, and the sequence of packets comprising the elements of the pseudo-random sequence in order. The middle node receives a plurality of packets, and identifies the sequence of packets sent by the source node in the plurality of packets by comparing identifiers of the packets with elements of the pseudo-random sequence.

## Description

### TECHNICAL FIELD

The present disclosure relates to communications in a network, for instance, Internet communications. The disclosure is concerned with network flows between network nodes, wherein the network flows comprise encrypted packets. The disclosure provides a source node for sending packets to a target node, and a middle node arranged between the source and the target node, for example, for performing congestion control.

### BACKGROUND

In the recent years, Internet users have heightened their expectations about the confidentiality and the privacy of their communications. To answer this need, a growing portion of Internet traffic travels encrypted, using virtual private networks or encrypted transport layer protocols such as Transport Layer Security (TLS) 13 or Quick UDP Internet Connections (QUIC).

To preserve user privacy and security on the Internet, encrypted protocols avoid using metadata (i.e., data associated with the network flows to which the packets belong) that can be used to correlate a packet with its source and destination (target). Instead, those encrypted protocols use cryptographic mechanisms to mask the metadata. These mechanisms either use public key cryptography (e.g., QUIC) or hidden key reference (e.g., Ariadne) combined with key derivation mechanisms such as O-DUKPT to exchange or designate the shared key to use to process a given packet. The challenge that those protocols are facing is to design an efficient key reference method, while preventing this key reference from leaking information about the network flow to which a given packet belongs.

On top of those security and privacy considerations, encrypted transport protocols raise specific management issues for network operators due to their encrypted nature. Indeed, to cope with the heterogeneity of their infrastructure, some network services providers use Performance Enhancing Proxies (PEP), also referred to as "middle box" or "middle node" in this disclosure, to adapt congestion control or packet loss detection mechanisms to the specificities of some links (e.g. satellite links). However, with encrypted transport protocols, the sequence numbers carried by packets are encrypted, preventing PEP from reading them and from deriving congestion or loss information from them. This also prevents the PEP from applying specific congestion control mechanisms.

### SUMMARY

In view of this, an objective of this disclosure is to find an adequate trade-off between user confidentiality and privacy requirements on the one hand side, and the need from network operators to use middle nodes when they need them on the other hand side. Accordingly, an objective is to provide a source node and a middle node for implementing said trade-off. An objective in doing so is to introduce as minimal overhead as possible. A further objective is to provide similar functionalities as conventional sequence numbers do in unencrypted protocol headers with regards to congestion control or packet loss detection.

These and other objectives are achieved by the solutions of this disclosure as described in the independent claims. Advantageous implementations are further described in the dependent claims.

A first aspect of this disclosure provides a source node for sending packets to a target node, the source node being configured to: determine a temporary key based on a master symmetric key available at the source node and at a middle node between the source node and the target node; determine a pseudo-random sequence based on the temporary key; and send a sequence of packets towards the target node; wherein each packet of the sequence of packets comprises one element of the pseudo-random sequence as a packet identifier; wherein the sequence of packets comprises the elements of the pseudo-random sequence in order.

The middle node may be a network element sitting on the path taken by packets sent from the source node towards the target node, and may forward the packets towards the target node and possibly perform a value-added service on the packets (e.g., filtering, decryption, encryption, verification, accounting, or the like). Note that the packets are sent in an order by the source node, but the middle node may not receive them in this order.

The pseudo-random sequence number may be used as a sequence number (packet identifier) and key reference at the same time, however, hidden from an external observer. The pseudo-random sequence number introduces minimal overhead, while it provides similar functionalities as conventional sequence numbers in unencrypted protocol headers. It enables a trade-off between user confidentiality and privacy requirements on the one hand side, and the need from network operators to use middle nodes on the other hand side.

A pseudo-random sequence is a sequence of numbers that appears random but is generated deterministically using an algorithm. Such a sequence may be produced by a pseudo-random number generator (PRNG) or a pseudo-random permutation of a sequence number. It is reproducible at the source and middle node, respectively, as the initial conditions may be exchanged and thus known. Unlike a true random sequence, the pseudo-random sequences may have a finite period.

In an implementation form of the first aspect, the source node is further configured to exchange the master symmetric key with the middle node.

This may be done by an exchange protocol, for instance, via communication between the two nodes, or with a third node. The master symmetric key may also be preconfigured at the two nodes.

In an implementation form of the first aspect, the source node is further configured to add the element of the pseudo-random sequence into a field of the packet intended for containing a packet sequence number as packet identifier.

Thus, the pseudo-random sequence elements may act like conventional sequence numbers identifying packets, however, are secret numbers as no one other than the source and the middle node know the order of elements in the pseudo-random sequence.

In an implementation form of the first aspect, the source node is further configured to generate the pseudo-random sequence using a pseudo-random permutation derived from the temporary key.

In an implementation form of the first aspect, the source node is further configured to: determine a window size; send a number of packets of the sequence of packets towards the source node, the number corresponding to the window size; wherein the number of packets comprises a number of elements of the pseudo-random sequence, and the number of elements are taken from the pseudo-random sequence in order and corresponding to the window size.

This window size allows the middle node to carry out congestion control in an efficient manner.

In an implementation form of the first aspect, the source node is further configured to: determine a short packet signature; and add the short packet signature to the element of the pseudo-random sequence in the packet.

This is beneficial in case of collisions of elements of the pseudo-random sequence for different packets.

In an implementation form of the first aspect, the source node is further configured to: send the sequence of packets using the QUIC protocol or an IP-based communication protocol; wherein the element of the pseudo-random sequence is included as a standalone capsule, or as a specific protocol field, or as a suffix of a connection identifier into the packet.

Generally, a protocol that encrypts the packets may be used.

In an implementation form of the first aspect, the source node is a network communication device, or a forwarding node, or a datacentre gateway.

A second aspect of this disclosure provide a middle node for controlling packets sent from a source node to a target node, the middle node being configured to: determine a temporary key based on a master symmetric key available at the source node and at the middle node; determine a pseudo-random sequence based on the temporary key; receive a plurality of packets; and identify in the plurality of packets, a sequence of packets sent by the source node towards the target node, by comparing packet identifiers of the packets with elements of the pseudo-random sequence; wherein the sequence of packets comprises the elements of the pseudo-random sequence in order.

The middle node may receive the sequence of packets in the same order the source node sent them, or not. The middle node and the source node determine the same temporary key and the same pseudo-random sequence, which is however unknown to an outside observer.

In an implementation form of the second aspect, the middle node is further configured to store the elements of the pseudo-random sequence in an indexed data structure.

The indexed data structure may be a hashmap.

In an implementation form of the second aspect, the middle node is further configured to perform a congestion control method on the sequence of packets identified by the elements of the pseudo-random sequence.

The congestion control is possible although the packets can be encrypted.

In an implementation form of the second aspect, the middle node is further configured to send an acknowledgement of an element of the pseudo-random sequence to the source node, upon receiving the packet comprising said element of the pseudo-random sequence.

In an implementation form of the second aspect, the middle node is further configured to identify a key used to decrypt the packet based on the element of the pseudo-random sequence in the packet.

A third aspect of this disclosure provides a method for sending packets to a target node, the method being performed at a source node and comprising: determining a temporary key based on a master symmetric key available at the source node and at a middle node between the source node and the target node; determining a pseudo-random sequence based on the temporary key; and sending a sequence of packets towards the target node; wherein each packet of the sequence of packets comprises one element of the pseudo-random sequence as a packet identifier; wherein the sequence of packets comprises the elements of the pseudo-random sequence in order.

In an implementation form of the third aspect, the source node exchanges the master symmetric key with the middle node.

In an implementation form of the third aspect, the source node adds the element of the pseudo-random sequence into a field of the packet intended for containing a packet sequence number as packet identifier.

In an implementation form of the third aspect, the source node generates the pseudo-random sequence using a pseudo-random permutation derived from the temporary key.

In an implementation form of the third aspect, the source node determines a window size; and sends a number of packets of the sequence of packets towards the source node, the number corresponding to the window size; wherein the number of packets comprises a number of elements of the pseudo-random sequence, and the number of elements are taken from the pseudo-random sequence in order and corresponding to the window size.

In an implementation form of the third aspect, the source node determines a short packet signature; and adds the short packet signature to the element of the pseudo-random sequence in the packet.

In an implementation form of the third aspect, the source node sends the sequence of packets using the QUIC protocol or an IP-based communication protocol; wherein the element of the pseudo-random sequence is included as a standalone capsule, or as a specific protocol field, or as a suffix of a connection identifier into the packet.

In an implementation form of the third aspect, the source node is a network communication device, or a forwarding node, or a datacentre gateway.

The method of the third aspect and its implementation forms provide the same advantages as described for the source node of the first aspect and its implementation forms.

A fourth aspect of this disclosure provides a method for controlling packets sent from a source node to a target node, the method being performed at a middle node and comprising: determining a temporary key based on a master symmetric key available at the source node and at the middle node determining a pseudo-random sequence based on the temporary key; receiving a plurality of packets; and identifying in the plurality of packets, a sequence of packets sent by the source node towards the target node, by comparing packet identifiers of the packets with elements of the pseudo-random sequence; wherein the sequence of packets comprises the elements of the pseudo-random sequence in order.

In an implementation form of the fourth aspect, the middle node stores the elements of the pseudo-random sequence in a hashmap.

In an implementation form of the fourth aspect, the middle node performs a congestion control method on the sequence of packets identified by the elements of the pseudo-random sequence.

In an implementation form of the fourth aspect, the middle node sends an acknowledgement of an element of the pseudo-random sequence to the source node, upon receiving the packet comprising said element of the pseudo-random sequence.

In an implementation form of the fourth aspect, the middle node identifies a key used to decrypt the packet based on the element of the pseudo-random sequence in the packet.

The method of the fourth aspect and its implementation forms provide the same advantages as described for the middle node of the second aspect and its implementation forms.

A fifth aspect of this disclosure provides a computer program comprising instructions which, when the program is executed by a computer, cause the computer to perform the method according to the third or fourth aspect.

A sixth aspect of this disclosure provides a non-transitory storage medium storing executable program code which, when executed by a processor, causes the method according to the third aspect or fourth aspect or any of its implementation forms to be performed.

In summary of the above aspects and implementation forms, this disclosure provides a mechanism allowing the source node of an encrypted network flow to add a (pseudo-random) sequence number used as a congestion signal and as reference to a temporary key into the packets belonging to the encrypted flow. The sequence number can be used to process a packet at a middle node residing on the path from the source node to the network flow's destination, the target node.

For example, in order to enforce security and privacy, the proposed mechanism using the pseudo-random sequence number is untraceable by an external observer, which means that the encrypted packets belonging to the same network flow do not contain similar metadata that would allow their correlation. From an operational perspective, the mechanism using the pseudo-random sequence number allows the middle node to detect congestion quickly, with variable congestion window sizes, with a minimal protocol overhead, and with a low impact on the forwarding delay. This means that the proposed mechanism does not have to perform algebraic operations that cannot be done at line rate on a network card.

This can be summarized in the following beneficial properties of the proposed mechanism. The mechanism using the pseudo-random sequence number has the ability to serve as a combined key reference and congestion signal, and no packet reference or metadata in clear text is provided. The mechanism provides the ability to detect lost or reordered packets, and the possibility to manage congestion over variable window sizes. It also avoids using exponentiation or public key cryptography operations.

It has to be noted that all entities, elements, units and means described in the present application could be implemented by software or hardware elements or any kind of combination thereof. All steps performed by the various entities described in the present application, as well as the functionalities described to be performed by the various entities, are intended to mean that the respective entity is adapted to or configured to perform the respective steps and functionalities. Even if, in the following description of specific embodiments, a specific functionality or step to be performed by external entities is not reflected in the description of a specific detailed element of that entity, which performs that specific step or functionality, it should be clear for a skilled person that these methods and functionalities can be implemented by respective software or hardware elements, or any kind of combination thereof.

### BRIEF DESCRIPTION OF DRAWINGS

The above described aspects and implementation forms are explained in the following description in relation to the enclosed drawings, in which:
- FIG. 1: shows a source node according to this disclosure for sending packets to a target node, and shows a middle node according to this disclosure located between the source and the target node.
- FIG. 2: shows an application scenario to which the solutions of this disclosure are applicable, with a source node and a middle node sharing a master symmetric key.
- FIG. 3: illustrates a temporary key being determined based on the master symmetric key at both the source node and the middle node, used to derive a pseudo-random sequence.
- FIG. 4: shows a sequence of packets being sent in a conventional manner from the source node to the middle node.
- FIG. 5: shows a sequence of packets being sent according to solutions of this disclosure from the source node to the middle node.
- FIG. 6: shows the sending of a particular packet by the source node.
- FIG. 7: illustrates the use of a hashmap at the middle node to identify packets of a flow.
- FIG. 8: shows the sending of an acknowledgement packet by the middle node to the source node.
- FIG. 9: illustrates the retrieval of a temporary key used to process a packet at the middle node.
- FIG. 10: illustrates completely the sending and processing of packets from the source node via the middle node to the target node.
- FIG. 11: shows a short packet signature that may be included in a packet in addition to the pseudo-random sequence number element.

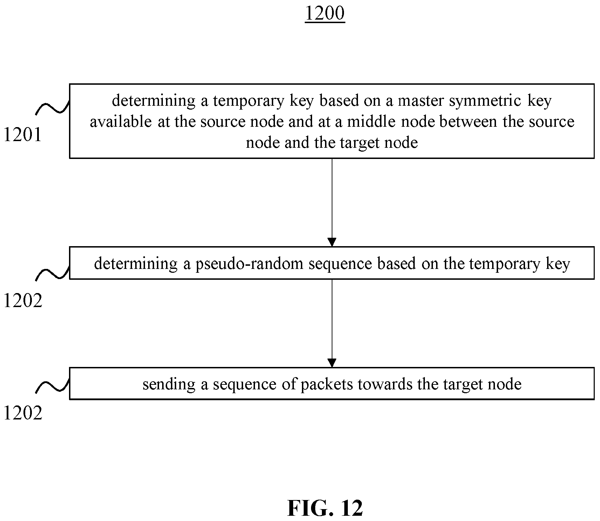

- FIG. 12: shows a method according to this disclosure performed by a source node for sending packets to a target node.

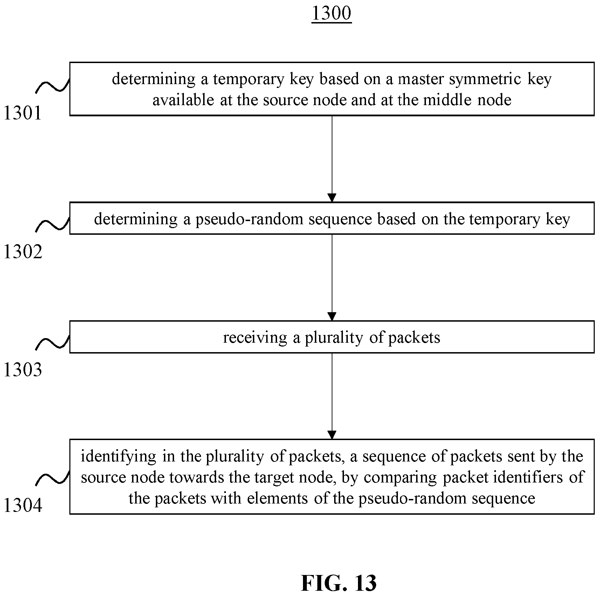

- FIG. 13: shows a method according to this disclosure performed by a middle node for controlling packets sent from a source node to a target node.

### DETAILED DESCRIPTION OF EMBODIMENTS

Illustrative but exemplary embodiments of the source node, the middle node, and corresponding methods are described in the following with reference to the above-mentioned figures. It should be noted that even if details are shown in the embodiments, these embodiments are intended to be exemplary, and in no way limiting to the scope of the disclosure.

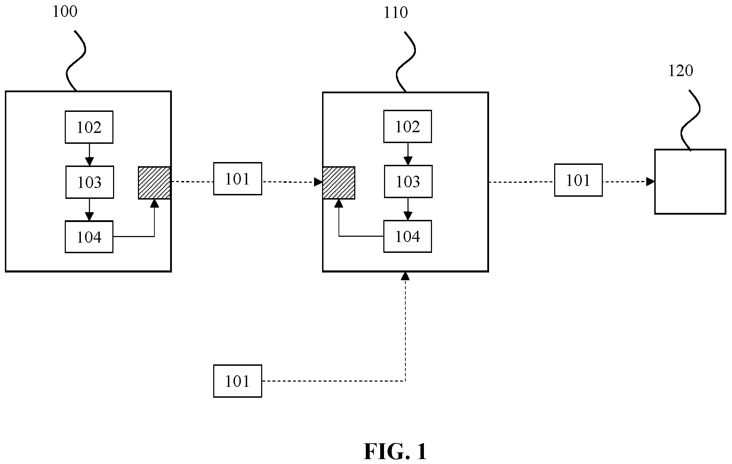

FIG. 1 shows a source node 100 according to this disclosure, a middle node 110 according to this disclosure, and a target node 120. The source node 100 sends packets 101 to the target node 120 as the packets' destination. The middle node 110 is arranged in the path of the packets 101 between the source node 100 and the target node 120. The middle node 110 is for controlling the packets 101 sent from the source node 100 to the target node 120. The source node may send the packets 101 using a quick UDP internet connections (QUIC) protocol or an IP-based communication protocol. Generally, the source node 100 may use a protocol performing packet encryption. The source node 100 and the target node 120 may be network nodes or network elements in a communication network. The source node 100 may be an application server, for example. The middle node 110 may be a datacentre gateway or a proxy, for example a PEP.

The source node 100 and the middle node 110 may both have a master symmetric key 102. That is the master symmetric key 102 is available both at the source node 100 and the middle node 110. The source node 100 and the middle node 110 may have exchanged the master symmetric key in advance.

The source node 100 is configured to determine a temporary key 103 based on the master symmetric key 102, for instance, it may derive the temporary key 103 from the master symmetric key 102.

The source node 100 is further configured to determine a pseudo-random sequence 104 based on the temporary key 103. For example, the source node 100 may generate the pseudo-random sequence 104 using a pseudo-random permutation (of a sequence) derived from the temporary key 103.

The source node 100 is then configured to send a sequence of packets 101 towards the target node 120, wherein the sequence of packets 101 may first reach the middle node 110 as illustrated. Each packet 101 of the sequence of packets 101 comprises one element of the pseudo-random sequence 104 as a packet identifier. The sequence of packets 101 comprises the elements of the pseudo-random sequence 104 in order. Thus, the pseudo-random sequence 104 may take the function of a conventional sequence number

The middle node 110 is configured to receive the sequence of packets 101 sent by the source node 100. However, the middle node 110 does not necessarily receive the packets 101 of the sequence of packets 101 in the order the source node 100 sent them. Moreover, the middle node 110 may receive further packets 101 sent, for instance, by other nodes, or packets 101 of another sequence of packets 101 sent by the same source node 100. Overall, the middle node 110 may receive a plurality of packets 101 from one or more other nodes in any order.

The middle node 110 is further configured to, like the source node 100, determine the temporary key 103 based on the master symmetric key 102.

The middle node 110 is further configured to, like the source node 100, determine the pseudo-random sequence 104 based on the temporary key 103.

The middle node 110 is then configured to identify - in the plurality of packets 101, which it overall receives - the sequence of packets 101 sent by the source node 100 towards the target node 120. The middle node 110 does this by comparing packet identifiers of the packets 101 with elements of the pseudo-random sequence 104, which is determined based on the temporary key.

The middle node 110 may use the information about the sequence of packets 101 to perform a congestion control method on the sequence of packets 101. The middle node 110 may also process the packets 101 in another way.

The source node 100 and/or the middle node 110 may respectively comprise a processor (not shown) or processing circuitry configured to perform, conduct or initiate various operations of the respective node 100, 110 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The source node 100 and/or the middle node 110 may respectively further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the respective node 100, 110 to be performed. In one embodiment, the processing circuitry comprises one or more processors and a non-transitory memory connected to the one or more processors. The non-transitory memory may carry executable program code which, when executed by the one or more processors, causes the respective node 100, 110 to perform, conduct or initiate the operations or methods described herein.

More details regarding the sending of packets 101 from the source node 100, via the middle node 110, towards the target node 120 are explained based on examples in the following.

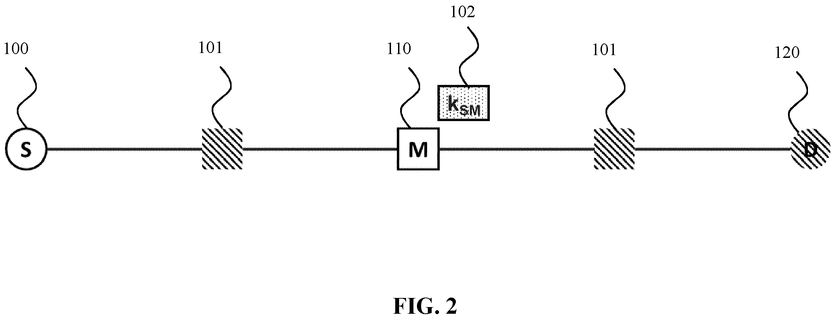

The setting shown in FIG. 2 is assumed. FIG. 2 shows a source node 100 denoted ***S*,** which shares a master symmetric key 102 denoted ***k_{SM}*** with a middle node 110 denoted ***M.*** The protocol or method used to exchange this master symmetric key 102 is out of the scope of this disclosure. Yet, this master symmetric key 102 can be exchanged, for instance, using a certain exchange protocol, and/or by means of communication between the nodes 100 and 110, or may be pre-distributed when the nodes 100, 110 are configured and deployed.

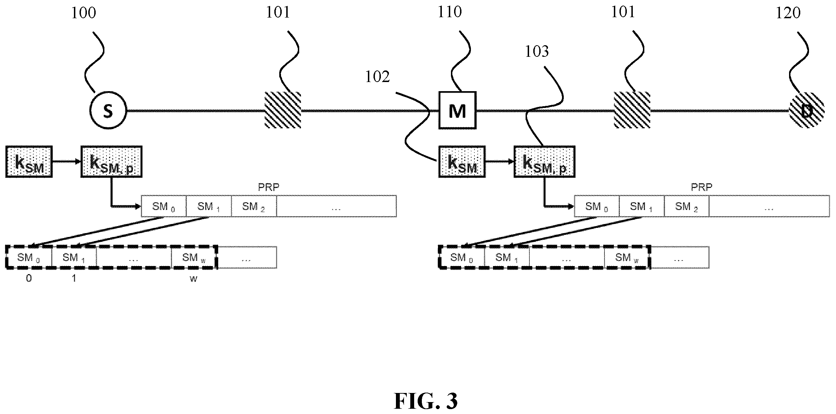

As shown further in FIG. 3, on both the source ***S*** and the middle node ***M,*** a temporary key 103 denoted ***k_{SM, p}*** is derived. This key derivation is done on both nodes 100, 110 using the same method, for instance, a conventional method can be used like derived unique key per transaction (DUKPT) or O-DUKPT. The derived key ***k***_{***SM*,** *p*} may then be used by both nodes ***S*** and ***M*** to initialize a pseudo-random permutation (PRP), in order to obtain the pseudo-random sequence 104. This operation may be done in isolation by each node 100, 110 following the same method. Then, a window of size denoted ***w*,** given by a congestion control method (or mechanism) may be initialized on both nodes ***S*** and ***M.*** The first ***w*** elements of the pseudo-random sequence 104 may be used to fill the initialized windows. As the nodes ***S*** and ***M*** may exchange information to manage congestion and to detect potential packet losses, both nodes 100, 110 may allocate some memory space to store the elements of the pseudo-random sequence 104, which are used as the encrypted indexes of the transiting packets 101, in the form of a vector or of a linked list. Besides, the middle node ***M*** may use a hashmap 701 or a similar data structure to store the computed elements of the pseudo-random sequence 104, for instance, with a pointer to the congestion window they belong to.

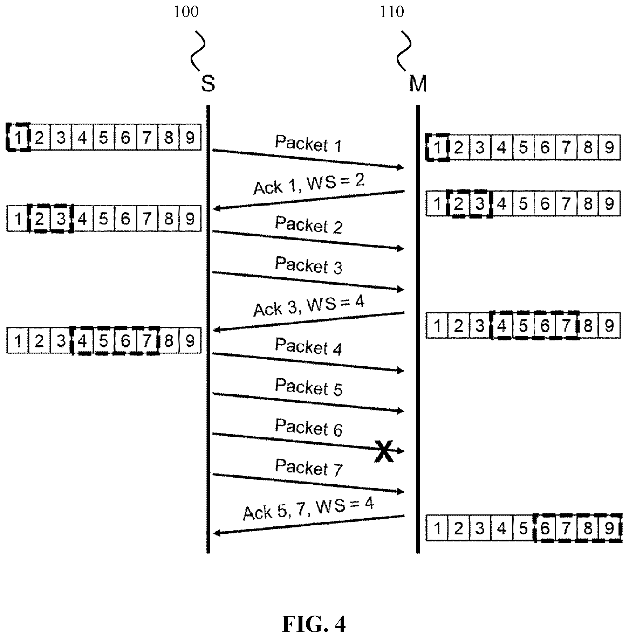

In the congestion control operations of an end-to-end transport protocol, the source and destination of packets conventionally carry a packet number denoted ***i*,** which identifies them. This packet number conventionally belongs to a monotonically increasing sequence of integers. It is conventionally used by the source to mark outgoing packets, so the destination can detect whether packets arrived in sequence, or out of order, or if some packets were lost. See in this respect FIG. 4, which shows a sequence of packets being sent in a conventional manner from the source node 100 to the middle node 110.

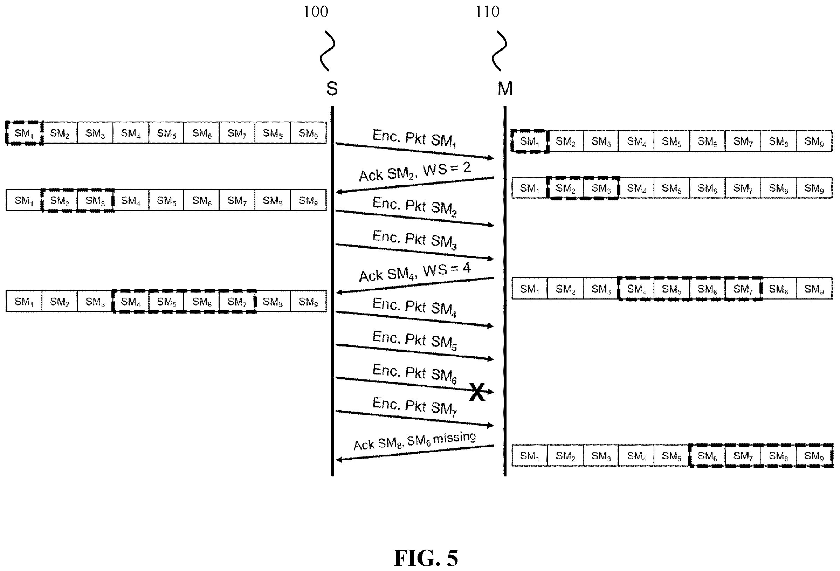

In the solutions of the present disclosure, this conventional packet number ***i*** is replaced by the value associated with the ***i^{th}*** element in the pseudo-random sequence 104, which has been instantiated earlier between the nodes **S** and ***M*.** See in this respect FIG. 5, which shows a sequence of packets 101 being sent in according to a solution of this disclosure, from the source node 100 to the middle node 110). In FIG. 5, instead of conventional sequence numbers, the pseudo-random sequence elements are used to identify and distinguish the packets 101.

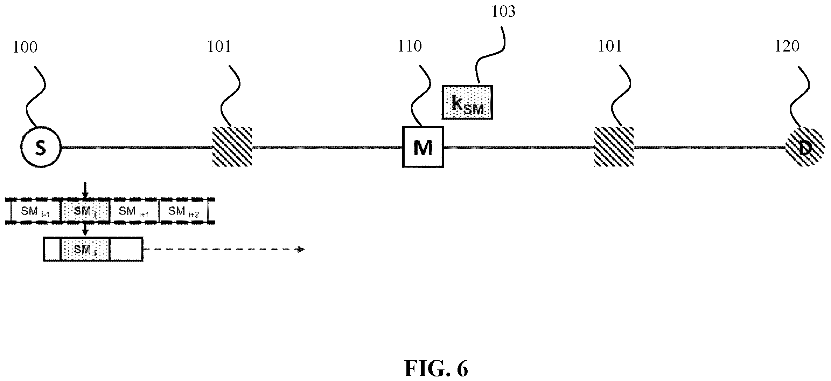

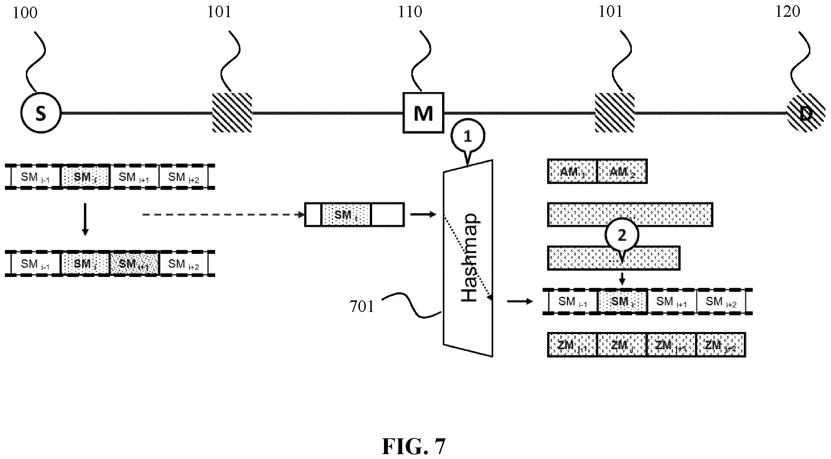

If the source node ***S*** wants to send the ***i^{th}*** packet 101 of the encrypted flow, ***S*** sends the packets 101 carrying a field containing respectively the element ***SMᵢ*** of the pseudo-random sequence 104 indexed by the sequence order ***i*** of the packet. See in this respect FIG. 6, which shows the sending of the particular ***i^{th}*** packet 101 by the source node 100. The source node 100 may make sure that the next element in pseudo-random sequence 104 is ready. If not, it may compute this element using the temporary key ***k**_{**SM,** p}.* On the middle node ***M,*** the network flow to which the packets 101 belong is identified, for example, by matching the field containing the element ***SMᵢ*** to a hashmap 701 (see step (1) in FIG. 7). Then, the field may be matched against the element of the pseudo-random sequence in the congestion sliding window (see step (2) in FIG. 7).

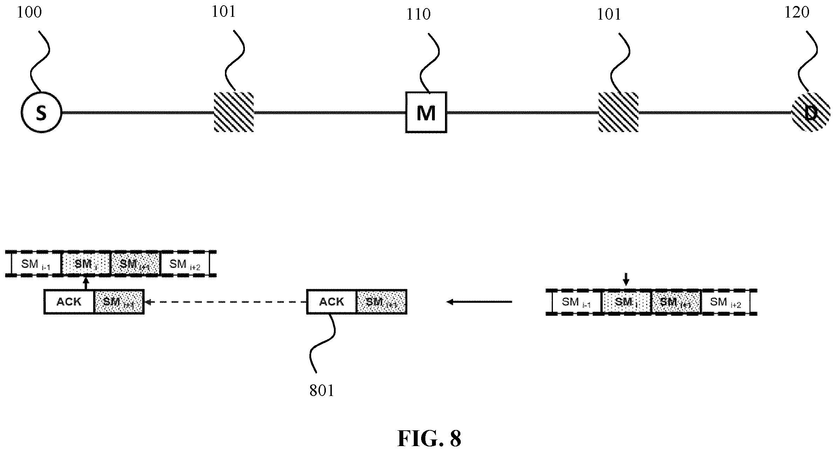

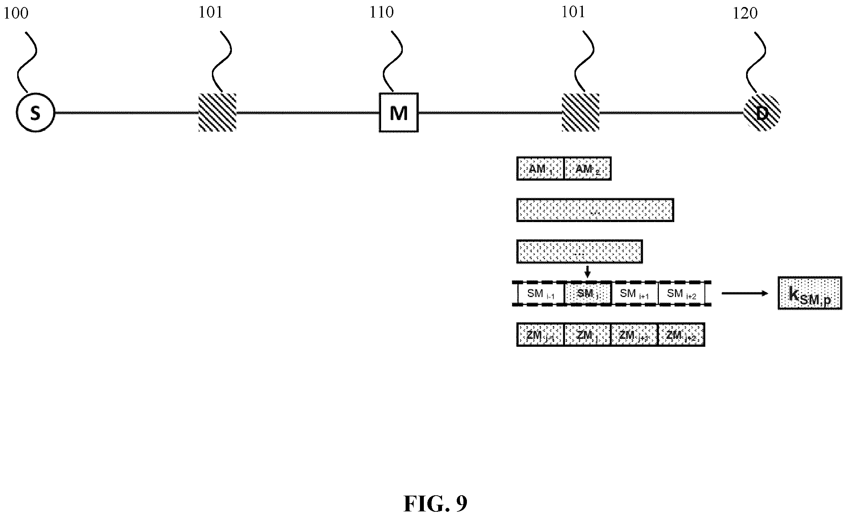

The middle node ***M*** follows the operation of the chosen congestion method, e.g. congestion algorithm, acknowledging the elements of the pseudo-random sequence 104 rather than their decrypted version. To do so, it may send an acknowledgement packet 801 containing the next element in the pseudo-random sequence 104 (i.e., ***SM*_{*i*+*1*}**) to the source node 100 (see FIG. 8). The received element ***SMᵢ*** can further be used by ***M*** to identify the key ***k_{SM,p}*** used to decrypt, re-encrypt, or process the packet 101, depending on the encrypted transport protocol operation (see FIG. 9).

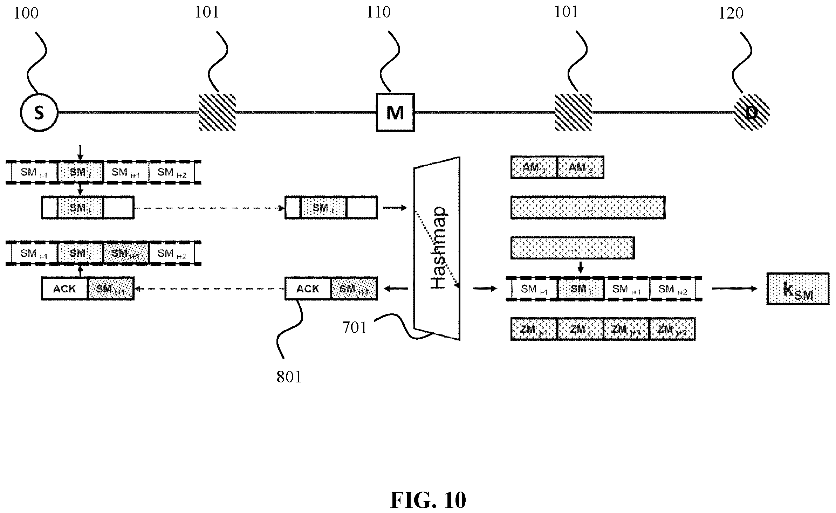

FIG. 10 shows an entire procedure of sending of packets from the source node via the middle node 110 to the target node 120, and processing them at the middle node 110.

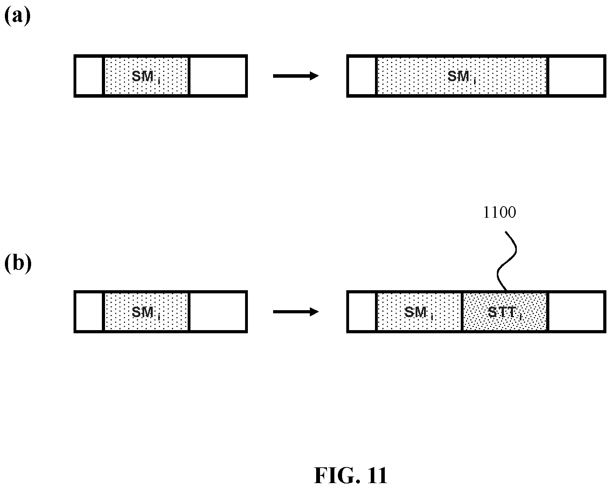

Various extensions are possible to the scheme described with respect to FIGs. 2 - 10 to tackle collision on the elements of the pseudo-random sequence 104 in the hashmap 701. In case ***M*** has to deal with a large number of flows, it may happen that some of these elements experience collision in the hashmap 701 managed by ***M*.** To address this issue, a conventional solution would be to increase the respective size of the elements to reduce the collision probability, as is illustrated in FIG. 11(a). The issue with this conventional solution would be, however, that it would impacts the global memory consumption of the hashmap 701 stored by ***M*,** and collision events can nevertheless still happen. Therefore, this disclosure proposes another solution, namely transporting a short packet signature 1100 denoted ***STTᵢ*** alongside the element ***SMᵢ,*** so as to allow the middle node ***M*** to determine which flow is referenced by the colliding ***SMᵢ.*** This is shown in FIG. 11(b). This signature verification would be optional, however, as it would introduce additional latency, and would be done only in case there is an ambiguity. To compute this signature, a short authentication tag could be used, for instance, a stand-alone MAC construct called SMAC.

In the following, some detailed, but exemplary embodiments are described, which implement solutions of this disclosure.

A first embodiment relates to a congestion-aware multiplexed application substrate over QUIC Encryption (MASQUE) proxy as the middle node 110. The quick UDP internet connections (QUIC) protocol is an encrypted protocol that is gaining popularity in the Internet. However, the encrypted nature of this protocol may prevent middle nodes (e.g., PEPs) from being able to detect and act on congestion and packet loss events for this protocol. Therefore, this disclosure proposes to modify QUIC to allow MASQUE proxies to participate in congestion management operations. In this new QUIC version, the element of the pseudo random sequence could be included in a standalone capsule in the QUIC packet, or as a suffix of the connection ID included in the QUIC invariants. For example, using a similar method as in the load balance QUIC (QUIC-LB). In this solution, the operations of the QUIC protocol follow the method described with respect to the FIGs. 2 -10. Therein, ***S*** may be a QUIC endpoint, and ***M*** may be a MASQUE proxy.

A second embodiment relates to an inter-datacentre communication optimization for artificial intelligence (AI) training and inference. In the recent years, AI has gained popularity. This success is for a major part related to the applications of Large Language Models (LLM). The accuracy and capabilities of LLM-based services is directly associated with those models' sizes. Training those models and serving requests using those models is a very intensive task, involving a growing number of computation nodes. As this number of nodes grows, it will soon be impossible to accommodate those nodes in a given datacentre. Yet, the distribution of AI workload has some strong requirements on the network. For example, the network flows generated by distributed AI tasks are very sensitive to packet losses and to delays generated by congestion events. Besides, they need to be secured as they transport potentially sensitive or private information.

One of the main issues with congestion management and packet loss detection related to AI-related network traffic flowing between datacentres is the heterogeneity in capacity and delay between intra-datacentre links and inter-datacentre links. To mitigate this issue, some projects introduce a gateway at the datacentres' borders, to detect congestion or packet loss events earlier than with end to end protocols. To that extent, those gateways use clear text sequence numbers. Those clear text sequence numbers are suitable in situations where the link is private or physically protected, but it has strong security and privacy issues on public infrastructure.

Solutions of the present disclosure may be used to allow datacentre border gateways to exchange congestion signals in a secure and private way. In this embodiment, ***S*** and ***M*** are two datacentre gateways. The embodiment uses solutions of this disclosure to manage congestion at a network flow level, using flow-specific master keys ***k_{SM,φ}*. *S*** can either ask a packet source to introduce an encrypted option header in the IP header of a packet 101, or can add the encrypted IP header option itself. When it receives the packet 101, ***M*** can retrieve and process the encrypted IP option, determine which flow the packet 101 belongs to using, for example, the hashmap 701 described above, monitor the packet 101 and signal out of order packets 101, packet losses or steep change in the delay experienced by the packet 101 to ***S*** more quickly than with the end to end procedures in place with the transport protocol in use.

A third embodiment relates to standard communication with network elements (SCONE). SCONE is a recently established working group in the Internet Engineering Task Force (IETF). Its goal is to define a mechanism allowing the sender of a video stream using the QUIC transport protocol to encode a bitrate information in the QUIC packet without requiring the decryption of the QUIC packet. Currently, three solutions are discussed in the SCONE working group, called TRAIN, SCONE-QUIC and SCONE-MASQUE. Unfortunately, each design option has some disadvantages. SCONE-QUIC uses QUIC INITIAL messages circulating alongside the video QUIC steam, behaving as an out of band protocol. This is generating overhead, and the signal is not protected. SCONE-MASQUE works in coordination with a MASQUE proxy in tunnelling mode. It uses a new capsule message to communicate a signal between the sender and the intermediate MASQUE proxy. This additional capsule generates overhead and the use of the tunnelling mode is consuming resources on the MASQUE proxy. TRAIN uses a new QUIC version which includes the signal in the invariants of the QUIC protocol header. This method avoids the use of an out of band signal, yet in this method the signal is not protected.

The embodiment using solutions of this disclosure addresses SCONE's use case while keeping the best properties of the solutions currently discussed in the working group, i.e., not introducing an out of band signalling message while protecting the signal exchanged between the sender and the network element. In this embodiment, ***S*** may be the QUIC video stream sender, and ***M*** may be the network element that needs to receive information about the bit rate of the video stream. The video stream exchanged can be encoded using a set of predefined bitrate values, which are denoted ***B₀*, *B₁*,** *..., **B_{R}.*** In this system, the bitrate can only be incremented or decremented by one step between two consecutive QUIC packets, i.e., the video bitrate can only go from ***Bᵣ*** to ***Bᵣ₊₁*** or from ***Bᵣ*** to ***Bᵣ₋₁*.**

In this embodiment, ***S*** and ***M*** exchange the video bitrate information using the following change to the procedure described above with respect to the FIGs. 2 - 10. It is assumed that packet ***p*** is encrypted or processed with key ***k_{SM,p}*,** and that the previously advertised video bitrate between ***S*** and ***M*** is ***B_{r,p-1}*, *M*** encrypts the values of ***B_{r,p}*,** ***B_{r-1,p}** and **B_{r+1,p}*** with ***k_{SM,p}*** and stores the resulting values in its hashmap 701. Then, when S wants to send packet ***p,*** it chooses the video bitrate value it wants to advertise (***B_{r,p}, B_{r-1,p}*** or ***B_{r+1,p}***), encrypts it with ***k_{SM,p}*,** and places the encrypted value in the result. When ***M*** receives the packet, it can both retrieve the key reference and the associated video bitrate information from the correspondence found in its hashmap 701.

In summary, the solutions of this disclosure propose the pseudo-random sequence 104 as a combined hidden sequence number and key reference mechanism to be used in encrypted protocols. The disclosure also proposes a deterministic key derivation mechanism at both the source node 100 and the middle node 110, and a hashmap 701 data structure at the middle node 110. Prior to sending a packet 101, the source node 100 and the middle node 110, which is allowed to act on the congestion control for an encrypted packet flow sent by the source node 100, exchange the master symmetric key 102, and the temporary key 103 is derived and then used to obtain the pseudo-random sequence 104. The source node 100 sends the packets 101 carrying a field containing the elements of the pseudo-random sequence in order, wherein this field is the combined key reference and sequence number. On the middle node 110, the flow to which the packets belong is identified by matching the field to the pseudo-random sequence 104, for instance, in a hashmap 701. The middle node 110 may implement the congestion control algorithm, acknowledging the pseudo-random sequence elements rather than their decrypted version.

These solutions provide several advantages. The sequence number and key reference - implemented by the pseudo-random sequence 104 - are hidden from an external observer, which improves the privacy of the traffic by hiding metadata that can be used to correlate packets together. Further, the elements of the pseudo-random sequence 104 may be changed at each hop (between nodes), for example, to the difference of the element used in the power sum method, leading to improved privacy. Moreover, the sequence number and key reference are combined in the pseudo-random sequence 104, which results in overhead reduction. The solutions can be implemented using symmetric key cryptography mechanisms, which means that packets can be processed at line rate.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfil the functions of several entities or items recited in the claims. The mere fact that certain measures are recited in the mutual different dependent claims does not indicate that a combination of these measures cannot be used in an advantageous implementation.

## Claims

1. A source node (100) for sending packets (101) to a target node (120), the source node (100) being configured to:
determine a temporary key (103) based on a master symmetric key (102) available at the source node (100) and at a middle node (110) between the source node (100) and the target node (120);
determine a pseudo-random sequence (104) based on the temporary key (103); and
send a sequence of packets (101) towards the target node (120);
wherein each packet (101) of the sequence of packets (101) comprises one element of the pseudo-random sequence (104) as a packet identifier;
wherein the sequence of packets (101) comprises the elements of the pseudo-random sequence (104) in order.

2. The source node (100) according to claim 1, further configured to exchange the master symmetric key (102) with the middle node (110).

3. The source node according to claim 1 or 2, further configured to add the element of the pseudo-random sequence (104) into a field of the packet (101) intended for containing a packet sequence number as packet identifier.

4. The source node (100) according to one of the claims 1 to 3, further configured to generate the pseudo-random sequence (104) using a pseudo-random permutation derived from the temporary key (103).

5. The source node (100) according to one of the claims 1 to 4, further configured to:
determine a window size;
send a number of packets (101) of the sequence of packets (101) towards the target node (120), the number corresponding to the window size;
wherein the number of packets (101) comprises a number of elements of the pseudo-random sequence (104), and the number of elements are taken from the pseudo-random sequence (104) in order and corresponding to the window size.

6. The source node (100) according to one of the claims 1 to 5, further configured to:
determine a short packet signature; and
add the short packet signature to the element of the pseudo-random sequence (104) in the packet (101).

7. The source node (100) according to one of the claims 1 to 6, further configured to:
send the sequence of packets (101) using a quick UDP internet connections, QUIC, protocol or an IP-based communication protocol;
wherein the element of the pseudo-random sequence (104) is included as a standalone capsule, or as a specific protocol field, or as a suffix of a connection identifier into the packet (101).

8. The source node (100) according to one of the claims 1 to 7, the source node (100) being a network communication device, or a forwarding node, or a datacenter gateway.

9. A middle node (110) for controlling packets (101) sent from a source node (100) to a target node (120), the middle node (100) being configured to:
determine a temporary key (103) based on a master symmetric key (102) available at the source node (100) and at the middle node (110);
determine a pseudo-random sequence (104) based on the temporary key (103);
receive a plurality of packets (101); and
identify in the plurality of packets (101), a sequence of packets (101) sent by the source node (100) towards the target node (110), by comparing packet identifiers of the packets (101) with elements of the pseudo-random sequence (104);
wherein the sequence of packets (101) comprises the elements of the pseudo-random sequence (104) in order.

10. The middle node (110) according to claim 9, further configured to store the elements of the pseudo-random sequence in an indexed data structure (701).

11. The middle node (110) according to claim 9 or 10, further configured to perform a congestion control method on the sequence of packets (101) identified by the elements of the pseudo-random sequence (104).

12. The middle node (110) according to one of the claims 9 to 11, further configured to send an acknowledgement (801) of an element of the pseudo-random sequence (104) to the source node (100), upon receiving the packet (101) comprising said element of the pseudo-random sequence (104).

13. The middle node (110) according to one of the claims 9 to 12, further configured to identify a key used to decrypt the packet (101) based on the element of the pseudo-random sequence (104) in the packet (101).

14. A method (1200) for sending packets (101) to a target node (120), the method (1200) being performed at a source node (100) and comprising:
determining (1201) a temporary key (103) based on a master symmetric key (102) available at the source node (100) and at a middle node (110) between the source node (100) and the target node (120);
determining (1202) a pseudo-random sequence (104) based on the temporary key (103); and
sending (1203) a sequence of packets (101) towards the target node (120);
wherein each packet (101) of the sequence of packets (101) comprises one element of the pseudo-random sequence (104) as a packet identifier;
wherein the sequence of packets (101) comprises the elements of the pseudo-random sequence (104) in order.

15. A method (1300) for controlling packets (101) sent from a source node (100) to a target node (120), the method (1300) being performed at a middle node (110) and comprising:
determining (1301) a temporary key (103) based on a master symmetric key (102) available at the source node (100) and at the middle node (110);
determining (1302) a pseudo-random sequence (104) based on the temporary key (103);
receiving (1303) a plurality of packets (101); and
identifying (1304) in the plurality of packets (101), a sequence of packets (101) sent by the source node (100) towards the target node (110), by comparing packet identifiers of the packets (101) with elements of the pseudo-random sequence (104);
wherein the sequence of packets (101) comprises the elements of the pseudo-random sequence (104) in order.

16. A computer program comprising instructions which, when the program is executed by a computer, cause the computer to perform the method (1200, 1300) according to claim 14 or 15.

## Amended claims

### Amended claims in accordance with Rule 137(2) EPC.

1. A source node (100) for sending packets (101) to a target node (120), the source node (100) being configured to:
determine a temporary key (103) based on a master symmetric key (102) available at the source node (100) and at a middle node (110) between the source node (100) and the target node (120);
determine a pseudo-random sequence (104) based on the temporary key (103); and
send a sequence of packets (101) towards the target node (120);
wherein each packet (101) of the sequence of packets (101) comprises one element of the pseudo-random sequence (104) as a packet identifier;
wherein the sequence of packets (101) comprises the elements of the pseudo-random sequence (104) in order, and
wherein the source node (100) is further configured to generate the pseudo-random sequence (104) using a pseudo-random permutation derived from the temporary key (103).

2. The source node (100) according to claim 1, further configured to exchange the master symmetric key (102) with the middle node (110).

3. The source node according to claim 1 or 2, further configured to add the element of the pseudo-random sequence (104) into a field of the packet (101) intended for containing a packet sequence number as packet identifier.

4. The source node (100) according to one of the claims 1 to 3, further configured to:
determine a window size;
send a number of packets (101) of the sequence of packets (101) towards the target node (120), the number corresponding to the window size;
wherein the number of packets (101) comprises a number of elements of the pseudo-random sequence (104), and the number of elements are taken from the pseudo-random sequence (104) in order and corresponding to the window size.

5. The source node (100) according to one of the claims 1 to 4, further configured to:
determine a short packet signature; and
add the short packet signature to the element of the pseudo-random sequence (104) in the packet (101).

6. The source node (100) according to one of the claims 1 to 5, further configured to:
send the sequence of packets (101) using a quick UDP internet connections, QUIC, protocol or an IP-based communication protocol;
wherein the element of the pseudo-random sequence (104) is included as a standalone capsule, or as a specific protocol field, or as a suffix of a connection identifier into the packet (101).

7. The source node (100) according to one of the claims 1 to 6, the source node (100) being a network communication device, or a forwarding node, or a datacenter gateway.

8. A middle node (110) for controlling packets (101) sent from a source node (100) to a target node (120), the middle node (100) being configured to:
determine a temporary key (103) based on a master symmetric key (102) available at the source node (100) and at the middle node (110);
determine a pseudo-random sequence (104) based on the temporary key (103);
receive a plurality of packets (101); and
identify in the plurality of packets (101), a sequence of packets (101) sent by the source node (100) towards the target node (110), by comparing packet identifiers of the packets (101) with elements of the pseudo-random sequence (104);
wherein the sequence of packets (101) comprises the elements of the pseudo-random sequence (104) in order, and
wherein each packet (101) comprises one element of the pseudo-random sequence (104) as packet identifier.

9. The middle node (110) according to claim 8, further configured to store the elements of the pseudo-random sequence in an indexed data structure (701).

10. The middle node (110) according to claim 8 or 9, further configured to perform a congestion control method on the sequence of packets (101) identified by the elements of the pseudo-random sequence (104).

11. The middle node (110) according to one of the claims 8 to 10, further configured to send an acknowledgement (801) of an element of the pseudo-random sequence (104) to the source node (100), upon receiving the packet (101) comprising said element of the pseudo-random sequence (104).

12. The middle node (110) according to one of the claims 8 to 11, further configured to identify a key used to decrypt the packet (101) based on the element of the pseudo-random sequence (104) in the packet (101).

13. A method (1200) for sending packets (101) to a target node (120), the method (1200) being performed at a source node (100) and comprising:
determining (1201) a temporary key (103) based on a master symmetric key (102) available at the source node (100) and at a middle node (110) between the source node (100) and the target node (120);
determining (1202) a pseudo-random sequence (104) based on the temporary key (103); and
sending (1203) a sequence of packets (101) towards the target node (120);
wherein each packet (101) of the sequence of packets (101) comprises one element of the pseudo-random sequence (104) as a packet identifier;
wherein the sequence of packets (101) comprises the elements of the pseudo-random sequence (104) in order, and
wherein the method further comprises generating the pseudo-random sequence (104) using a pseudo-random permutation derived from the temporary key (103).

14. A method (1300) for controlling packets (101) sent from a source node (100) to a target node (120), the method (1300) being performed at a middle node (110) and comprising:
determining (1301) a temporary key (103) based on a master symmetric key (102) available at the source node (100) and at the middle node (110);
determining (1302) a pseudo-random sequence (104) based on the temporary key (103);
receiving (1303) a plurality of packets (101); and
identifying (1304) in the plurality of packets (101), a sequence of packets (101) sent by the source node (100) towards the target node (110), by comparing packet identifiers of the packets (101) with elements of the pseudo-random sequence (104);
wherein the sequence of packets (101) comprises the elements of the pseudo-random sequence (104) in order, and
wherein each packet (101) comprises one element of the pseudo-random sequence (104) as packet identifier.

15. A computer program comprising instructions which, when the program is executed by a computer, cause the computer to perform the method (1200, 1300) according to claim 13 or 14.
